# EUROPEAN PATENT SPECIFICATION

(11) **EP 1 579 316 B1**
(45) Date of publication and mention of the grant of the patent: **16.11.2016**
(21) Application number: 03768043.6
(22) Date of filing: 19.12.2003
(51) Int. Cl.: G06F 17/30

(54) **MODELLING TOOL**
MODELLIERUNGSWERKZEUG
OUTIL DE MODELISATION

(30) Priority: 23.12.2002 SE 0203842
(43) Date of publication of application: 28.09.2005
(73) Proprietor: SYSTEMITE AB, 402 26 Göteborg (SE)
(72) Inventor: SÖDERBERG, Jan, SE-412 74 Göteborg (SE); ANDERSSON, Claes, SE-427 38 Billdal (SE); STRÖMBERG, Mikael, SE-416 56 Götebrog (SE)
(74) Representative: Awapatent AB
(86) International application number: PCT/IB2003/006122
(87) International publication number: WO 2004/057500

(56) References cited:
- WO-A-00/67156
- WO-A-01/75669
- US-B1- 6 263 341
- H J KUO: "Open architecture and tool integration of software development environments", IEEE, 23 April 1990 (1990-04-23), pages 444-454, XP010033340, Waltham, MA, USA
- J Geller ET AL: "Ownership Semantics in the Financial Domain", Proceedings of the 9th IFIP, 1 January 2001 (2001-01-01), XP055136988, Hong Kong Retrieved from the Internet: URL:http://citeseerx.ist.psu.edu/viewdoc/d ownload;jsessionid=6C7E461A42EB3097B2FB2AE 100AF725D?doi=10.1.1.21.1848&rep=rep1&type =pdf [retrieved on 2014-08-27]

## Description

### TECHNICAL FIELD

The present patent application relates to a modelling tool according to the preamble to Claim 1.

A modelling tool is a tool that handles models in a formalized way. When the model is stored in a database, this makes possible structured access and storing of data. An object-based modelling tool utilizes a database in which objects are stored. The modelling tool ensures that relationships can be described between the stored objects in a structured way. The relationships between the objects are determined via connection elements stored in the database.

By handling of models is meant input, storage and access of objects that are stored in the database and determining of relationships between objects via connection elements. In addition, there are means for displaying the model, for example in the form of a graphical interface, control instructions to data-driven process tools, drawings in CAD format, etc. In order for the model to be able to be input, stored and displayed, the modelling tool thus comprises a database handler and a user interface for communication with the user.

A modelling tool is used in the manufacturing industry to develop and describe complicated technical objects that are manufactured in the manufacturing industry. By models is meant here a representation of the object that is to be manufactured. The model determines the manufacturing process in this case. The model is thus a necessity for the production. The model constitutes the basis for the drawings and process description for manufacture. A change in the model generates, by necessity, a change in the final product. A correct and structured handling of the model is thus a precondition for correct end products.

The modelling tool comprises a server of a normal kind as follows:
Computers can be used for storing and accessing information. Where the information is stored in a computer, but is communicated to and used by other computers, the first computer is called in this role a *server,* while the computers that use the information are called *clients.* Note that if a computer is used for more than one purpose, it can be both a server and a client at the same time. The reason for utilizing several clients is that one user per client computer can use the client to enter in new information and to display existing information from the server, and these persons can thus share information. The role of the server is to store the information, and to make possible reading and writing from the clients. For this purpose, it must handle conflicts that arise if more than one client attempts to access the same information simultaneously, for example by helping one client at a time and letting the others await their turn. Note that this structure of client and server, called client-server architecture, can be used in the case when there is only one client. In a corresponding way to that in which a computer can act as a server, a program in a computer can act as a server program and other programs can act as client programs. As it is the programs that control the activities in a computer, it is always a server program that makes a computer act as a server, while at the same time a client program makes a client act as a client. If the information is stored in some tabular format where each quantity of information has an address, a so-called database, the server is called a *database server.* A database server can be used to store system models. In a special case of client-server, the database can be handled by a general database server that communicates with a specialized server program, a so-called application server which in turn communicates with the client program. Such structures of programs and computers which execute these programs are called multi-layer architectures and allow greater freedom to design efficient communication and the use of standardized or commercial technologies. By "server" can be meant either a server computer with server program or alternatively only a server program.

An example of a database server is described in WO 01/33397. An example of a modelling tool is described in EP 742 523.

An example of relationship between objects in an object-oriented database is described in "Geller, J., Ownership semantics in the financial domain, Proceedings of the 9th IFIP, 1 January 2001 XP055136988, Hong Kong.

The modelling tool thus comprises a database server with a memory area, a processor, and a set of rules for structured storage and accessing of a database in the said memory area. In addition, the modelling tool comprises an incoming and an outgoing channel via which the said processor is designed to handle the incoming and outgoing information to and from the said memory area.

The set of rules defines characteristics of entities which are intended to be stored and represented in the said database, and connection elements which describe the relationship between associated entities. By relationship is meant that an entity refers in some way to another entity.

The rules make possible storage of entities and relationships between entities according to object models such as, for example, Unified Modelling Language (UML), see for example Fowler, M. with Scott, K. 1997 or Object Role Modelling (ORM), see for example Halpin, T. 1988, "Object Role Modelling": an overview, white paper, www.vision.com/infomodeller or "Business rules and object role modelling", database Prog. & Design, 9, 10, Miller Freeman, San Mateo CA, 66-72.

UML distinguishes between classes, instances and objects. In the existing modelling tools, entities defined by the said set of rules comprise classes, instances and objects. UML also distinguishes between relationships of the types association and link. In the existing modelling tools, the connection elements defined by the said set of rules are utilized for both associations and links and thus describe all types of relationships between entities.

Examples of how a database can be implemented by linking objects to each other is disclosed in H J KUP: "Open archtechture and tool integration of software development environments" IEEE, 23 April 1990, pages 444 - 454, XP 10033340, Waltham, MA, USA. The document investigates software development environments from an environment architect's perspective. Four types of mechanisms are identified: Modelling and Schema-Definition mechanisms, Access mechanisms, Interprocess Communication mechanisms, and Execution mechanisms.

### BACKGROUND ART

Modelling is used in order to describe characteristics of an object that are important for a particular purpose, while omitting characteristics that are not of significance for the purpose. An object of modelling can be to analyse a problem in order to find solutions. In the case when the models follow a well-defined set of rules, a so-called metamodel, they are suitable for being stored in computers and databases.

For example, a box can be described by three dimensions, its width, its depth and its height. Such a model can thus be stored as three numerical values, so-called attribute values, and a database can be used to describe a large number of such boxes. More complex models, such as the models that are required in order to describe technical systems such as a car or a manufacturing plant, must, in addition to describing individual entities, also describe how different things, entities, can be put together or have other relationships to each other in order to be able to build more complex models. If a model is to have an unambiguous interpretation, it must be expressed in a particular language with grammar which was designed to be able to be used to express certain types of model. Such languages constitute the abovementioned metamodels. Metamodels are usually flexible, in order to enable the models to be extended. Our box example above can, for example, be extended by describing the weight of the box and its colour, if these are of importance for a particular purpose.

Examples of known metamodels are defined in UML and ORM.

In a modelling tool, a metamodel is used to describe a system model. A description of the system model is created in the modelling tool by the use of the metamodel, which description is stored in a database. The database is administered by a database server and is accessible to a client via an application interface, API, which in turn is accessible to a user via a user interface, that is a keyboard and VDU.

By modelling tool is meant, according to what is described above, a program that, when executed in a computer, makes possible the display and input of a model. A modelling tool follows a metamodel, as described above. This metamodel can either be completely predefined and fixed, or can be modified by the user to a greater or lesser extent. A modelling tool can be designed to be able to store the model in a database according to the previously described client-server architecture.

System models are divided into two categories, a first category, the structure model, which describes the structure of the system which is to be described, that is the parts comprised in the system and how these together make up the system, and a second category, the behaviour model, which describes how the system and the parts of the system are expected to react to input data. Normally parts of the behaviour model correspond to one or more parts of the structure model. Both the behaviour model and the structure model can be described by a common metamodel such as, for example, UML or ORM.

A structure model can, in addition, be divided into two categories, static structure models and dynamic structure models. A static structure model is independent of the behaviour of the model, while a dynamic structure model is dependent upon the behaviour of the model. For deterministic systems, it is the case that the appearance of the dynamic structure model can be described directly from the static structure model.

A static system can be described and analysed completely directly from the component parts in a static structure model. For dynamic systems, it is the case, however, that the dynamic structure model must be executed in order to make possible a complete analysis of the dynamic system.

A normal development project developed according to object-oriented methods contains a very large number of classes, often thousands. These classes can be developed by a large number of developers, from different organizations and companies. There are often a very large number of connections between the classes: Instances of a class exist as instances within instances of other classes; each class can exist in different variants and versions, whose instances can exist at the same time in the system. Instances of a class can, in addition, exist in several different development projects. In order to be able to handle such systems, the metamodel that is used must support a number of characteristics: a change in one project must not affect another project in an uncontrolled way, for example by a common class being changed; the connection in which a particular characteristic of a model applies must be unambiguous; security must be guaranteed, so that users cannot access confidential parts in a model; in brief, at each handling stage of a model, it must be completely unambiguous to the modelling tool what is to be carried out, and for the user it must be completely clear what is being carried out. Certain of these characteristics are supported in current metamodels such as, for example, UML, but not systematically so that required characteristics can be guaranteed. Without this guarantee, the developed systems will have a number of defects on account of the complexity: changes of a class will affect other projects that use the class in unpredictable and unwanted ways; deliberate changes in a model will only be partially carried out, etc.

What is described above can be exemplified by the following: Assume that both the models A and B contain an instance of the class C. If the model A is to be frozen, the user will want further changes of all the model's characteristics to be prevented. As A contains an instance of the class C, a part of A's characteristics are described by this class. If A is frozen without C being frozen, any development of the model B will mean that C is changed, whereby A will be affected, despite the fact that it is frozen. Accordingly we have broken the rule that A cannot be changed. In complex models, there are thousands of classes and automatic support is required in order to prevent the problem described, as manual methods cannot guarantee consistency.

Within object-oriented models such as UML, a class describes all characteristics that are possible for entities that belong to this class. These characteristics are, for example, attributes (named possible values) that are permitted for the entities or possible relationships to other entities. *Objects* in a so-called object model, describe unique occurrences of the classes. Objects define all characteristics that are unique to each object, that is keep the values for each attribute and links to other objects. In computer programs, implemented executable objects, so-called object-oriented programming, can be used to handle physical objects, or to handle parts of the execution of the computer program. This type of object can generally be dynamic, that is they can be created and discarded by the program during the time that it is being executed. For so-called embedded systems, software that is permanently built into an electronic product, such dynamics involves a complexity that can often not be accepted, as the handling of the dynamics can interfere with the system's interaction with its surroundings. In these cases, the objects are static, that is each object exists for the whole time that the system is being used. Such a system can be described by means of a static object model, where each object exists the whole time. Another example of a static system that can be modelled by object-oriented models is physical product models, for example a mechanical construction or an electronic construction. A class model for a static system can be made so unambiguous that the class model and the corresponding object model are unambiguously described by each other. For example, the class model describes unambiguously all links that exist between each object. What the object model provides is the keeping of values for the attributes for the objects. As the object model is static, it is possible to define composite and more complex object models in a simple way by combining instances of corresponding classes. These complex models require, however, certain characteristics of the metamodel in order for it to be possible to describe how dependencies between different parts of the model are to be handled. For software, the object model is usually defined implicitly by the software's code, without creating corresponding explicit object models. This is one of the reasons that metamodels such as UML, which are traditionally intended to describe dynamic software systems, do not contain the support for static models that this patent application describes. For static systems, it is of great value to be able to describe a class model that effectively defines the static object model and structures of object models.

For example, an interconnected class model comprising a class structure can describe object characteristics by referring to incorporated classes and at the same time defining the ownership of the object characteristics in the class structure. This means that a separate object model does not need to be created and stored. An advantage of this is that the class model and corresponding object model will be mutually consistent.

For a further explanation, a clarifying example is given below: Assume that we are modelling a class model consisting of a car which contains a motor which contains a piston. In the object model we want to describe that the piston is to be manufactured of aluminium.

If a separate object model is used, that is an object model according to current technology, a separate model corresponding to the class model must be created. Changes in the class model will require corresponding changes in the object model.

If a model utilizing connection elements according to the invention is used, the object model can be described by a single connection element, where the value "aluminium" is connected to the attribute "material" for the class "piston" where the class has the role of owner. Class model and corresponding object model will thus be mutually consistent, that is if a change is made in the class model, the object model will be changed in the same way.

A problem with the modelling system described in EP 742 523 is that it does not contain means for structured version handling.

### DISCLOSURE OF INVENTION

An object of the invention is to provide a modelling tool which in a clear way makes it easy for a user to keep track of large static structure models in a structured way, where there can be a plurality of simultaneous versions of the classes involved at the same time. This object is achieved by means of a modelling tool according to the characterizing part of Claim 1. By ensuring that each entity in a group of associated entities is connected via a connection element which has an identification mark which uniquely determines the ownership relationship between the associated entities, a stored model is obtained where version handling is guaranteed to take place in a structured way and in a way that is easy for the user to understand. By the indication of the owner relationship for all comprised entities which are related to each other, it is ensured, for example, that changes that are made affect the model in a controlled, easy to understand and unambiguous way.

The version handling is carried out in a structured and unambiguous way, since the indicated owner-entity determines the ability of the owned entities also to be modified, and since an owner entity is always required according to the metamodel and therefore is always guaranteed to exist. In the case that the owned entity is an instance, the ability to be modified is also to be applicable to the instance's class. By ability to be modified is meant the ability to change a class, including connection elements that are owned by the class and entities that are indicated by connection elements.
If the indicated owner entity is frozen in the version, that is assumes a status that cannot be changed, this means that all the entities with classes comprised in the connection element are to be frozen. This means that freezing is propagated until all the entities concerned have been frozen. Note that in order to obtain a model that corresponds to the described metamodel even during the freezing operation, the model must be frozen in the correct order, from elementary entities that are not owner entities in any connection element, until the owner identity can be frozen.

In the case of a modelling tool according to current technology being used, there can be associated entities at the same level without the control of an owner. This means that changing of versions can occur independently in both the entities. In the case of one of the entities in a group of entities being frozen, that is assuming a status that cannot be changed and at the same time is dependent upon the other entities, these will be able to be changed without authorization from the frozen entity. The content of the frozen entity can be changed without the user being aware of it.

In a preferred embodiment of the invention, the owning entity in an associated group of entities defines at least the characteristics "version", "ability to be modified", "existence" and "accessibility" for all the entities in the said associated group of entities. By existence is meant the ability of an entity to exist in the model. This ability is controlled by the owner entity: if the owner entity is eliminated, all the owned instances must be eliminated. By means of this embodiment, it is made easier for a user to keep track of different versions of the model in a structured way and to contribute in a structured way towards the ability to be modified and access being controlled in a way that is easy to understand.

In an additional preferred embodiment, in addition to the said owner relationship, the connection element describes all relationships between the entities in the said group of connected entities in the form of roles. As one element is used to describe all the relationships between entities, the clarity of the models generated by the modelling tool is improved even more.

In yet another preferred embodiment of the invention, in addition to an identification mark which uniquely determines the owner relationship between the associated entities, the connection element comprises any one, some or all of the following characteristics: name, class characteristic, descriptive text, change history. By providing this enhanced capability for connection elements, the description of complex systems is made easier.

### BRIEF DESCRIPTION OF DRAWINGS

An embodiment of the invention will be described below in detail with reference to the attached drawings, in which:
Figure 1 shows a schematic picture of a modelling tool according to the invention,
Figure 2 shows two interconnected entities,
Figure 3 shows two interconnected entities in the relation in the relation interface,
Figure 3a shows an example of an interface represented according to current technology,
Figure 3b shows an example of an interface represented according to the invention,
Figure 4 shows two interconnected entities in the relation in the relation union,
Figure 5 shows two interconnected entities in the relation in the relation inheritance,
Figure 6 shows a connection element in tabular form,
Figure 7 shows incorporated roles in a connection element in tabular form.

### PREFERRED EMBODIMENT(S)

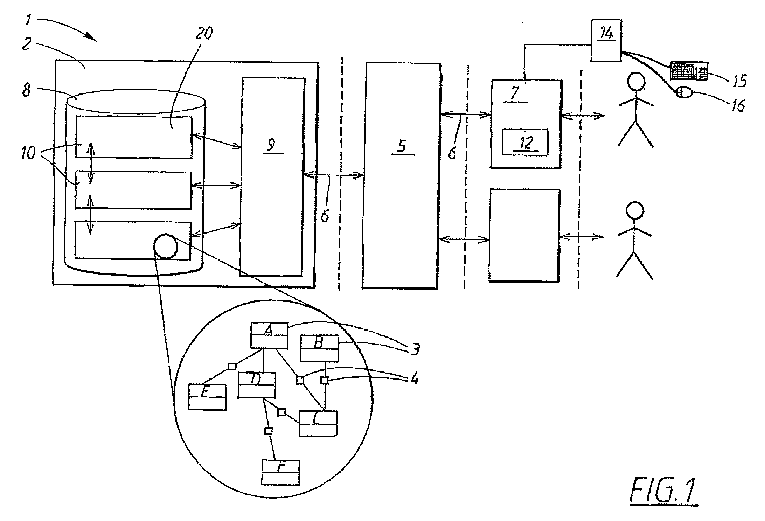

Figure 1 shows schematically a diagram of a modelling tool 1. The modelling tool 1 comprises a database server 2. The modelling tool 1 also comprises a set of entities 3 and a set of connection elements 4. According to the embodiment shown, the entities 3 and the connection elements 4 are stored in the database server 2. The database server 2 communicates with the application server 5 via a communication bus 6 or a network. The communication between the database server 2 and the application server 5 is controlled via a user interface 7, in the form, for example, of a personal computer. The application server 5 controls the access to and changing of the model stored in the database server.

The database server 2 can be of a conventional type and comprises a memory area 8, a processor 9, an existing set of rules 10 for the said processor for structured storage of and access to a database in the said memory area and an incoming and outgoing databus 11 via which the said processor 9 is designed to handle the incoming and outgoing information respectively for the said memory area 8. In a preferred embodiment, the existing set of rules 10 can consist of a relationship database with SQL interface. In the example shown, there are rules corresponding to the metamodel that describes the modelling tool and rules that describe the metamodels for applications. The invention can, however, also be used for object databases or structured combinations of relationship databases and object databases.

The database server's processor 9 controls the handling of the said memory area 8 and thereby the handling of the said entities 3 and connection elements 4 according to a set of rules which is stored in a control area 20 arranged for the processor.

In addition to being connected to the database server, the application server 5 is also connected to the databus or network 6 for communication with the database server 2 and user interface 7 respectively.

According to a first alternative embodiment, the entities 3 and connection elements 4 are stored in the database server's 2 memory area 8. According to a second alternative embodiment, the entities 3 and connection elements 4 are, in addition, stored in a memory area in the user interface 7, whereby mechanisms in the application server and the user interface update the information in both the storage locations, so that they correspond.

According to an embodiment of the invention, the user interface 7 consists of a conventional personal computer. According to this embodiment, the personal computer 7 comprises, in addition to the said memory area 12, a processor 13, a VDU 14 and input units in the form of a keyboard 15 and a mouse 16. The user interface 7 communicates with the database server 2 and the application server 5 via the databus or the network 6.

The appearance of the entities 3 and connection elements 4 which are stored in the memory area in the application server 5 or in the memory area 12 in the user interface 7 or the memory area 8 in the database server 2 can vary depending upon which application is being used.

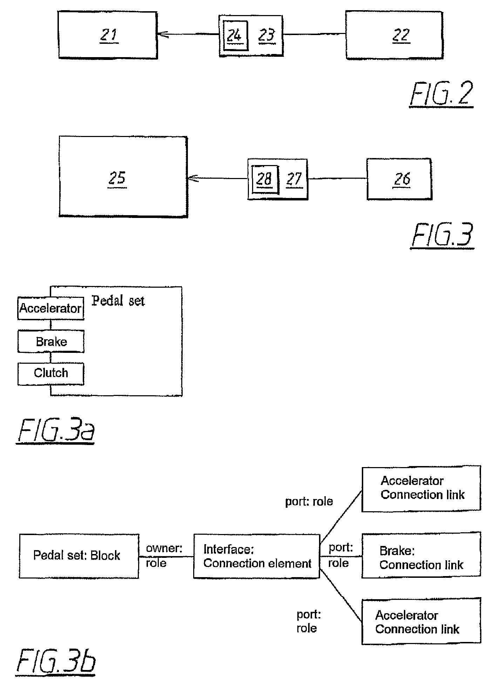

Connection elements 4 describe the relationship between associated entities. In order to interconnect two entities, 21, 22 as shown in Figure 2, it is necessary to use a connection element 23. The control area 20 with its rules ensures that the interconnection is carried out using a connection element 23. The connection element 23 also indicates one of the entities in the group 21, 22 of entities as owner. This is carried out by an identification mark 24 which uniquely determines the owner relationship between the associated entities 21, 22. The group of entities 21, 22 can comprise more entities than the two that are used in the example.

According to an embodiment of the invention, in addition to the owner relationship between the entities, the connection elements also determine all the relationships between the entities in the said group of interconnected entities in the form of roles. The connection elements 4 can thereby be of various kinds in order to support different roles of connected identities. In a preferred embodiment of the invention, the different kinds of connection element comprise interface, union, inheritance, requirement-inheritance, function modelling, requirement modelling, integration, variant definition, data flow, virtual allocation, allocation and packaging.

Connection elements are used in the modelling tool to provide an erasing tool, a freezing tool, an access tool and a storage tool in accordance with what is described below. All the tools are incorporated in the application server 5. All the tools are activated and controlled from connected clients 7.

The erasing tool is arranged as follows:
When a client wants to erase an entity, the erasing tool first checks that the user of the client has the right to erase the entity, according to the rights that have been stored for the entity. Corresponding checks are carried out for the erasing of only connection elements.

If the rights do not exist, the erasing tool terminates the operation and instead sends a message about this to the client.

Thereafter, the erasing tool identifies all the connection elements that are owned by the entity, according to the ownership role for these. All such connection elements are erased, after which the entity itself is erased. Corresponding operations are carried out for the erasing of only connection elements.

The freezing tool is arranged as follows:
When a client wants to freeze an entity, the freezing tool first checks that the user of the client has the right to freeze the entity, according to the rights that have been stored for the entity. Thereafter, the freezing tool identifies all the connection elements that are owned by the entity. It identifies all entities that are referenced from these connection elements, etc, until a closed set of entities and connection elements has been identified. Thereafter, it checks that there is nothing to prevent this set of entities being frozen, as defined by the rights to these, or other conditions of the entities that would prevent freezing, for example the case that an entity is so-called checked-out, that is temporarily prevented from being changed or frozen by any other user. If there is nothing that prevents it, the freezing tool freezes all the entities in the set. Otherwise, the freezing tool declines to carry out the operation, and instead sends a message about this to the client. In the event of a request to freeze only an indicated entity, the freezing tool carries out corresponding operations only for this entity, without in addition identifying and freezing the entities that are referenced via the owned connection elements. The freezing tool thus ensures that a logical freezing of a model can be carried out where only indicated entities are frozen. With the currently known tool, freezing can only be carried out of a file that comprises data. This data can describe parts or all of the model, but is not limited in relation to how entities relate to each other. Currently known tools can thus not provide freezing of specifically selected parts of a model in a way that is guaranteed to conform logically to the model. In the cases where the known tools store models in databases so that entities can be frozen, there are no rules and mechanisms for defining in a controlled way which entities are to be frozen at the same time.

The storage tool is arranged as follows:
For storage of new connection elements, the storage tool checks that one, and only one, ownership role is defined, that this is owned by an existing entity, and that the user of the client has the right to carry out the operation for this entity. If these conditions are not fulfilled, the storage tool declines to carry out the operation and instead sends a message about this to the client. Corresponding operations are carried out by the storage tool for the changing of only connection elements.

The access tool is arranged as follows:
In the event of access to a stored connection element, the access tool checks that the user has the right to read this, according to the rights that are defined for the owning entity for the connection element. In the event of access to a stored entity, the corresponding operation is carried out.

Figure 3 shows in particular two entities in the roles of block 25 and of port 26, where by block is meant an entity having an interface, and by port is meant an entity of the type connection link, which defines a part of the interface, and where an existing identification mark 28 on a connection element 27 indicates the entity 25 in the role of block as owner. By interface is meant the surface whereby one class interacts with other classes, all interaction that can call for methods in other classes, send signals to other classes, etc, passes through the interface. In the metamodel according to a preferred embodiment of the invention, an interface is shown with one port.

In Figure 3a are exemplified the interfaces gas, brake and clutch in a class Pedal Set in a style defined by Grady Booth. In this case, the roles are "owner" and "port"!

Figure 3b shows the same model represented using a modelling tool according to the invention.

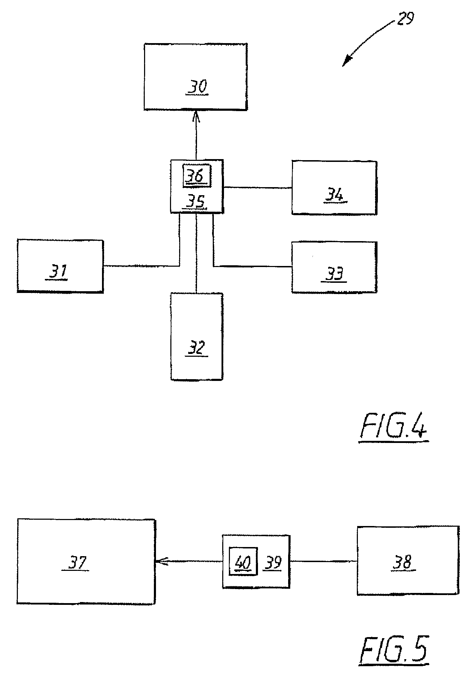

In addition, Figure 4 shows a group 29 of associated entities which define a union and comprise entities in the roles of union 30 and of subset(s) 31 - 34, where by the role of union 30 is meant an entity of the type block, connection link, requirement or activity, which entity comprises the presence of all the entities with the role of subset 31 - 34 and by the role of subset is meant an entity 31 - 34 of the type block, connection link, requirement or activity, where an entity can only have one of the roles, the role of union or the role of subset. The entities 30 - 34 are connected via a connection element 35 and the said identification mark indicates the entity 30 in the role of union as owner by means of an identification mark 36.

Figure 5 shows entities 37, 38, associated with a group, which define an inheritance relationship. The group comprises an entity 38 in the role of parent and a second entity 37 in the role of child. An entity in the role of parent comprises at least the characteristics interface, operations, attribute and description and an entity in the role of child inherits all the characteristics of the entities in the role of parent. In addition, it shows a connection element 39 which connects the entity 38 in the role of parent and the entity 37 in the role of child. The connection element 39 comprises an identification mark 40 which indicates the entity 37 in the role of child as owner.

According to a preferred embodiment of the invention, the connection element comprises, in addition to an identification mark which uniquely determines the owner relationship between the associated entities, any one, some or all of the following characteristics: name, class characteristic, descriptive text, change history.

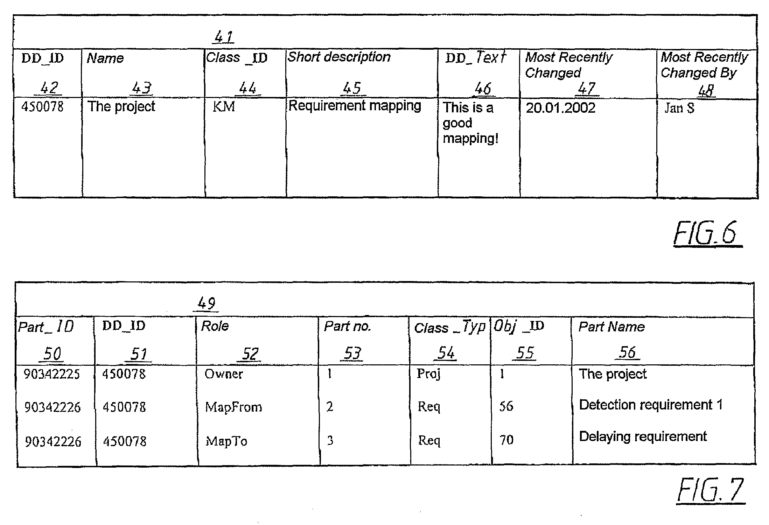

Figure 6 shows a connection element 41 in tabular form. In the embodiment shown, the connection element comprises the following columns 42 - 48, DD_ID; Name; Class_ID; ShortDescription; DD_Text; MostRecentlyChanged; MostRecentlyChangedBy. By DD_ID is meant a unique identification number for a connection element. By Name is meant a designation of a connection element. By Class_ID is meant which class the connection element belongs to. By ShortDescription is meant a data field for a short descriptive text for the connection element. By DD_Text is meant an information field that the connection element has. By MostRecentlyChanged is meant the most recent date of changing of the connection element. By MostRecentlyChangedBy is meant who has carried out the most recent change.

Figure 7 shows the roles comprised in a connection element in tabular form. The table 49 comprises the following columns: Part_ID; DD_ID; Role; PartNumber; Class_Type; Obj_ID; PartName.
By Part_ID is meant an identification key that identifies each part of a connection element. By DD_ID is meant a unique identification number for a connection element. By Role is meant the role that an identified entity has in a relationship that is indicated by the connection element. By PartNumber is meant an enumeration number within a connection element. This can be used for sorting all the parts of a connection element. By Class_Type is meant the metaclass of an entity indicated by the connection element. By Object_ID is meant an identification of the class to which the object belongs. By PartName is meant the name of the instance, the realization of an entity which is included in the relationship identified by the connection element.

According to the invention, the connection element determines, via an identification mark, the unique owner relationship between associated entities. According to a preferred embodiment of the invention, the owning entity in the associated group of entities defines at least the characteristics version, ability to be modified and accessibility for all the entities in the said associated group of entities.

For all the entities with roles, including classes for these, for the respective entities which are connected via a connection element and thereby have different roles, the ability to be modified is limited to the ability to be modified of the entity with the role of owner. According to an embodiment of the invention, the ability to be modified has two states, changeable and not changeable (frozen).

For all the entities with roles, including classes for these, for the respective entities which are connected via a connection element and thereby have different roles, the accessibility is limited to accessibility of the entity with the role of owner. By accessibility is meant a user's right to read, change, refer to from other entities and erase an entity. The accessibility of the connection element and the ability to interconnect entities with entities that are allocated roles via the connection element can, however, be even more limited than the accessibility that the owner entity indicates.

Below is an example of a set of rules which makes easier the representation of certain systems in a modelling tool according to the invention which is very suitable for being implemented in a modelling tool according to the invention:
1) An entity of the type requirement in the role of union can only be connected to an entity of the type requirement in the role of subset.
2) An entity of the type connection link in the role of union can only be connected to an entity of the type connection link in the role of subset.
3) A group of associated entities defines, in addition, a function representation and comprises entities in the roles of input function and output function, where an entity in the role of input function is of any type with a particular behaviour and a defined interface, and entities in the role of output function have a behaviour and an interface corresponding to the interface and behaviour of the input function, and the said identification mark indicates an entity in the said unit as owner. By behaviour is meant how an object of a particular class reacts to stimuli, for example by changing state, sending signals to other objects, etc.
4) A group of associated entities defines an inheritance relationship and comprises entities in the roles of parent and child, where an entity in the role of parent comprises at least the characteristics interface, operations, attribute and description, and where an entity in the role of child inherits all the characteristics of the entities in the role of parent and the said identification mark indicates an entity in the role of child as owner. The group of entities consists preferably of entities of the type requirement.
5) The connection element can consist of an attribute value. By attribute value is meant that it is possible to handle an instance of a class as an object and allocate values to its attribute. This type of object model, where an instance of a class is regarded as an object is correct in the cases where the model is static and unambiguous, that is in the system that is modelled all the objects exist statically, no new objects are created or removed, and the number of instances is fixed (no interval is defined). In this case, the class model can be used as object model, if values are added to the attributes. This type of object attribute is hierarchical and each class level that has instances of other classes and their instances in turn, can be handled as separate object models. The following shows an example of the use of attribute values. One classes, "motor" and is found as instance in a class "car", with the multiplicity 1. In such a case, the motor in the car can be regarded as an object and, for example, an attribute colour of the motor can be allocated a value so that the motor is red. It only has this characteristic, however, when it is located in "car". The fact that the attribute "colour" exists is defined/owned by the motor's class. The connection element "object attribute" that defines the colour "red" for the attribute is owned, however, by the class that owns the instance, in this case "car". If a higher class, for example "car fleet", has an instance of "car", this can in turn allocate attribute values to both "car" and "motor". In this case, the car will perhaps be white and the motor will be blue. Which value is then applicable in this case? The car "says" after all that the motor is "red", while at the same time "car fleet" says that the motor is "white". The natural interpretation is that the highest class has priority.

## Claims

1. A modelling tool (1) comprising:
a database server (2) for storing a database including a static model representing a technical object to be manufactured, the model comprising
entities (3) and
connection elements (4), each of which defines a group of associated entities (3);
a processor (9) designed to handle incoming and outgoing information to and from the database server (2);
a set of rules (10) for structured storage and accessing of the database, the rules (10) further defining characteristics of the entities (3) and the connection elements (4); and
a user interface (7) allowing a user to communicate with the database server (2),
**characterized in that**
each connection element (4) has an identification mark (24) indicating one, and only one, of the entities (3) in the corresponding group as owner entity, wherein a user's accessibility to a connection element (4) and to the entities (3) in the corresponding group is limited by the user's accessibility to the owner entity, as defined by rights stored for the entity,
wherein the modelling tool (1) further comprises an erasing tool which is arranged, upon an instruction to erase an entity (3) given by a user:
to verify that the user has a right to erase the entity (3) according to rights that have been stored for the entity (3),
if the right to erase does not exist, to terminate the operation and instead send a message to the client,
thereafter, to identify all the connection elements (4) that identify the entity (3) as owner entity and to erase all such connection elements (4), after which the entity (3) itself is erased.

2. The modelling tool according to Claim 1, **characterized in that** the modelling tool comprises a freezing tool which is arranged, upon an instruction to freeze an entity (3) given by a user:
to verify that the client has the right to freeze the entity (3), according to the rights that have been stored for the entity (3), thereafter to identify all the connection elements (4) that are owned by the entity (3),
upon the identification of owned entities (3), to identify all entities (3) that are referenced from these connection elements (4), until a closed set of entities (3) and connection elements (4) has been identified,
thereafter, to check that there is nothing to prevent this set of entities (3) being frozen, as defined by the rights to these, or other conditions of the entities (3) that would prevent freezing, comprising, for example, the case that an entity (3) is temporarily prevented from being changed or frozen by any other user,
to freeze all the entities (3) in the set, if there is nothing that prevents it, and
not to carry out the freezing, if there is anything that prevents it, and instead to send a message about this to the client.

3. The modelling tool according to Claim 1 or 2, **characterized in that** the modelling tool comprises a storage tool which is arranged, upon an instruction to store an entity (3) or a connection element (4) given by a user:
for the storage of new connection elements (4), to check the conditions that one, and only one, ownership role is defined, that this is owned by an existing entity (3), and that the user of the client has the right to carry out the storage of the entity, and thereafter
to decline to carry out the storage of the entity (3), if the conditions are not fulfilled, and instead to send a message about this to the client, or
to carry out storage of the entity (3) or connection element (4), if the conditions are fulfilled.

4. The modelling tool according to any one of Claims 1-3, **characterized in that** the modelling tool comprises an access tool which is arranged, upon an instruction to give access to an entity (3) or a connection element (4) given by a user:
to check that the user has the right to read the entity (3) or the connection element (4), according to the rights that are defined for the owning entity (3) for the connection element (4), and thereafter
to give access to the entity (3) or the connection element (4), if the rights exist or to decline access if the rights do not exist.

5. The modelling tool according to any one of Claims 1-4, **characterized in that** the owning entity (3) in the associated group of entities (3) defines at least the characteristics version, ability to be modified, existence and accessibility for all the entities (3) in the said associated group of entities (3).

6. The modelling tool according to Claim 5, **characterized in that** the characteristic version is supported by the characteristic freezing, by which is meant that the ability to be modified ceases for the said group of associated entities.

7. The modelling tool according to any one of Claims 1-6, **characterized in that**, in addition to the said owner relationship, the connection element (4) describes all the relationships between the entities (3) in the said group of interconnected entities (3) in the form of roles.

8. The modelling tool according to Claim 7, **characterized in that** the said group of associated entities (3) defines an interface and comprises entities (3) in the roles of block and of port, where by block is meant an entity having an interface, and by port is meant an entity (3) of the type connection link, which defines a part of the interface, and **in that** the said identification mark (24) indicates an entity (3) in the role of block as owner.

9. The modelling tool according to Claim 7 or 8, **characterized in that** the said group of associated entities (3) defines a union and comprises entities (3) in the roles of union and of subset, where by the role of union is meant an entity (3) of the type block, connection link, requirement or activity, which entity (3) comprises the occurrence of all the entities (3) with the role of subset and by the role of subset is meant an entity (3) of the type block, connection link, requirement or activity, where an entity (3) can only have one of the roles of union or subset, and **in that** the said identification mark (24) indicates an entity (3) in the role of union as owner.

10. The modelling tool according to Claim 5, **characterized in that** an entity (3) of the type requirement in the role of union can only be connected to an entity (3) of the type requirement in the role of subset.

11. The modelling tool according to Claim 9 or 10, **characterized in that** an entity (3) of the type connection link in the role of union can only be connected to an entity (3) of the type connection link in the role of subset.

12. The modelling tool according to any one of Claims 9-11, **characterized in that** the said group of associated entities (3) in addition defines a function modelling and comprises entities (3) in the roles of input function and output function, where an entity (3) in the role of input function is of any type with a particular behaviour and a defined interface, and entities (3) in the role of output function have a behaviour and an interface corresponding to the interface and behaviour of the input function, and **in that** the said identification mark (24) indicates an entity (3) in the said union as owner.

13. The modelling tool according to any one of Claims 7-12, **characterized in that** the said group of associated entities (3) defines an inheritance relationship and comprises entities in the roles of parent and of child, where an entity (3) in the role of parent comprises at least the characteristics interface, operations, attribute and description and where an entity (3) in the role of child inherits all the characteristics of the entities (3) in the role of parent and **in that** the said identification mark (24) indicates an entity (3) in the role of child as owner.

14. The modelling tool according to Claim 12, **characterized in that** the said group of entities (3) is of the type requirement.

15. The modelling tool according to any one of Claims 1-14, **characterized in that** the connection element (4) comprises the characteristics: class characteristic and descriptive text, in addition to an identification mark (24) which uniquely determines the owner relationship between the associated entities (3).

## Patentansprüche

1. Modellierwerkzeug (1), umfassend:
einen Datenbankserver (2) zum Speichern einer Datenbank, die ein statisches Modell umfasst, das ein herzustellendes technisches Objekt darstellt, wobei das Modell
Entitäten (3) und
Verbindungselemente (4) umfasst, von denen jedes eine Gruppe von zugehörigen Entitäten (3) definiert;
einen Prozessor (9), der konzipiert ist, eingehende und ausgehende Informationen zum und vom Datenbankserver (2) zu behandeln;
eine Reihe von Regeln (10) zum strukturierten Speichern und Zugreifen auf die Datenbank, wobei die Regeln (10) weiter Charakteristiken der Entitäten (3) und der Verbindungselemente (4) definieren; und
eine Benutzeroberfläche (7), die einem Benutzer ermöglicht, mit dem Datenbankserver (2) zu kommunizieren;
**dadurch gekennzeichnet, dass**
jedes Verbindungselement (4) eine Identifizierungsmarke(24) aufweist, die eine und nur eine von den Entitäten (3) in der entsprechenden Gruppe als Besitzerentität anzeigt, wobei eine Zugänglichkeit eines Benutzers zu einem Verbindungselement (4) und zu den Entitäten (3) in der entsprechenden Gruppe durch die Zugänglichkeit des Benutzers zur Besitzerentität begrenzt ist, wie sie durch Rechte definiert ist, die für die Entität gespeichert sind, wobei das Modellierwerkzeug (1) weiter ein Löschwerkzeug umfasst, das ausgeführt ist, eine vom Benutzer gegebene Entität (3) auf einen Befehl zu löschen:
zu verifizieren, dass der Benutzer ein Recht aufweist, die Entität (3) gemäß Rechten, die für die Entität (3) gespeichert wurden, zu löschen,
wenn das Recht zu Löschen nicht existiert, den Vorgang zu beenden und stattdessen eine Nachricht an den Client zu senden,
danach alle Verbindungselemente (4) zu identifizieren, welche die Entität (3) als Besitzerentität identifizieren, und alle solchen Verbindungselemente (4) zu löschen, wonach die Entität (3) selbst gelöscht wird.

2. Modellierwerkzeug nach Anspruch 1, **dadurch gekennzeichnet, dass** das Modellierwerkzeug ein Einfrierwerkzeug umfasst, das ausgeführt ist, auf einen Befehl eine Entität (3), die von einem Benutzer gegeben ist, einzufrieren:
zu verifizieren, dass der Client das Recht aufweist, die Entität (3) einzufrieren, gemäß den Rechten, die für die Entität (3) gespeichert wurden, und danach alle Verbindungselemente (4) zu identifizieren, die von der Entität (3) besessen werden,
nach der Identifikation von besessenen Entitäten (3), alle Entitäten (3) zu identifizieren, die von diesen Verbindungselementen (4) referenziert werden, bis ein geschlossener Satz von Entitäten (3) und Verbindungselementen (4) identifiziert wurde,
danach zu überprüfen, dass es nichts gibt, das verhindert, dass dieser Satz von Entitäten (3) eingefroren wird, wie definiert durch die Rechte bezüglich diesen, oder andere Bedingungen der Entitäten (3), die das Einfrieren verhindern würden, was beispielsweise den Fall umfasst, dass eine Entität (3) vorübergehend daran gehindert wird, von irgendeinem anderen Benutzer geändert oder eingefroren zu werden,
alle Entitäten (3) in dem Satz einzufrieren, wenn es nichts gibt, das es verhindert, und
das Einfrieren nicht auszuführen, wenn es dort irgendetwas gibt, das es verhindert, und stattdessen eine Nachricht darüber an den Client zu senden.

3. Modellierwerkzeug nach Anspruch 1 oder 2, **dadurch gekennzeichnet, dass** das Modellierwerkzeug ein Speicherwerkzeug umfasst, das ausgeführt ist, auf einen von einem Benutzer gegebenen Befehl eine Entität (3) oder ein Verbindungselement (4) zu speichern:
für das Speichern von neuen Verbindungselementen (4) die Bedingungen zu überprüfen, dass eine und nur eine Eigentümerschaftsrolle definiert ist, dass diese von einer vorhandenen Entität (3) besessen wird, und dass der Benutzer des Clients das Recht aufweist, das Speichern der Entität auszuführen, und danach
zu verweigern, das Speichern der Entität (3) auszuführen, wenn die Bedingungen nicht erfüllt sind, und stattdessen eine Nachricht darüber an den Client zu senden, oder
das Speichern der Entität (3) oder des Verbindungselements (4) auszuführen, wenn die Bedingungen erfüllt sind.

4. Modellierwerkzeug nach einem der Ansprüche 1 bis 3, **dadurch gekennzeichnet, dass** das Modellierwerkzeug ein Zugriffswerkzeug umfasst, das ausgeführt ist, auf einen von einem Benutzer gegebenen Befehl, Zugriff auf eine Entität (3) oder ein Verbindungselement (4) zu geben:
zu überprüfen, dass der Benutzer das Recht aufweist, die Entität (3) oder das Verbindungselement (4) zu lesen, gemäß den Rechten, die für die besitzende Entität (3) für das Verbindungselement (4) definiert sind, und danach Zugriff auf die Entität (3) oder das Verbindungselement (4) zu geben, wenn die Rechte existieren, oder den Zugriff zu verweigern, wenn die Rechte nicht existieren.

5. Modellierwerkzeug nach einem der Ansprüche 1 bis 4, **dadurch gekennzeichnet, dass** die besitzende Entität (3) in der zugehörigen Gruppe der Entitäten (3) mindestens die Charakteristikversion, die zu modifizierende Fähigkeit, Existenz und Zugänglichkeit für alle Entitäten (3) in der besagten zugehörigen Gruppe von Entitäten (3) definiert.

6. Modellierwerkzeug nach Anspruch 5, **dadurch gekennzeichnet, dass** die Charakteristikversion durch das Charakteristikeinfrieren unterstützt wird, womit gemeint ist, dass die Fähigkeit, modifiziert zu werden, für die besagte Gruppe von zugehörigen Entitäten endet.

7. Modellierwerkzeug nach einem der Ansprüche 1 bis 6, **dadurch gekennzeichnet, dass** zusätzlich zu der besagten Besitzerbeziehung das Verbindungselement (4) alle Beziehungen zwischen den Entitäten (3) in der besagten Gruppe von miteinander verbundenen Entitäten (3) in der Form von Rollen beschreibt.

8. Modellierwerkzeug nach Anspruch 7, **dadurch gekennzeichnet, dass** die besagte Gruppe von zugehörigen Entitäten (3) eine Schnittstelle definiert und Entitäten (3) in den Rollen von Block und von Port umfasst, wobei mit Block eine Entität gemeint ist, die eine Schnittstelle aufweist, und mit Port eine Entität (3) des Typs Verbindungsglied gemeint ist, welcher einen Teil der Schnittstelle definiert, und dadurch, dass die Identifizierungsmarke (24) eine Entität (3) in der Rolle von Block als Besitzer anzeigt.

9. Modellierwerkzeug nach Anspruch 7 oder 8, **dadurch gekennzeichnet, dass** die besagte Gruppe von zugehörigen Entitäten (3) eine Vereinigung definiert und Entitäten (3) in den Rollen von Vereinigung und Untergruppe umfasst, wobei mit der Rolle von Vereinigung eine Entität (3) vom Typ Block, Verbindungsglied, Anforderung oder Aktivität gemeint ist, wobei die Entität (3) das Auftreten von allen Entitäten (3) mit der Rolle von Untergruppe umfasst, und mit der Rolle von Untergruppe eine Entität (3) vom Typ Block, Verbindungsglied, Anforderung oder Aktivität gemeint ist, wobei eine Entität (3) nur eine von den Rollen von Vereinigung oder Untergruppe aufweisen kann, und dadurch, dass die Identifizierungsmarke(24) eine Entität (3) in der Rolle von Vereinigung als Besitzer anzeigt.

10. Modellierwerkzeug nach Anspruch 5, **dadurch gekennzeichnet, dass** eine Entität (3) vom Typ Anforderung in der Rolle von Vereinigung nur mit einer Entität (3) vom Typ Anforderung in der Rolle von Untergruppe verbunden sein kann.

11. Modellierwerkzeug nach Anspruch 9 oder 10, **dadurch gekennzeichnet, dass** eine Entität (3) vom Typ Verbindungsglied in der Rolle von Vereinigung nur mit einer Entität (3) vom Typ Verbindungsglied in der Rolle von Untergruppe verbunden sein kann.

12. Modellierwerkzeug nach einem der Ansprüche 9 bis 11, **dadurch gekennzeichnet, dass** die besagte Gruppe von zugehörigen Entitäten (3) außerdem ein Funktionsmodellieren definiert und Entitäten (3) in der Rolle von Eingangsfunktion und Ausgangsfunktion umfasst, wobei eine Entität (3) in der Rolle von Eingangsfunktion von jedem Typ mit einem bestimmten Verhalten und einer definierten Schnittstelle ist und Entitäten (3) in der Rolle von Ausgangsfunktion ein Verhalten und eine Schnittstelle aufweisen, die der Schnittstelle und dem Verhalten der Eingangsfunktion entsprechen, und dadurch, dass die besagte Identifizierungsmarke(24) eine Entität (3) in der besagten Vereinigung als Besitzer anzeigt.

13. Modellierwerkzeug nach einem der Ansprüche 7 bis 12, **dadurch gekennzeichnet, dass** die Gruppe von verbundenen Entitäten (3) eine Erbschaftsbeziehung definiert und Entitäten in den Rollen von Elternteil und von Kind umfasst, wobei eine Entität (3) in der Rolle von Elternteil mindestens die Charakteristiken, Operationen, das Attribut und die Beschreibung umfasst, und wobei eine Entität (3) in der Rolle von Kind alle Charakteristiken der Entitäten (3) in der Rolle von Elternteil erbt, und dadurch, dass die besagte Identifizierungsmarke(24) eine Entität (3) in der Rolle von Kind als Besitzer anzeigt.

14. Modellierwerkzeug nach Anspruch 12, **dadurch gekennzeichnet, dass** die besagte Gruppe von Entitäten (3) vom Typ Anforderung ist.

15. Modellierwerkzeug nach einem der Ansprüche 1 bis 14, **dadurch gekennzeichnet, dass** das Verbindungselement (4) die Charakteristiken umfasst: Klassencharakteristik und beschreibender Text zusätzlich zu einer Identifizierungsmarke (24), welche eindeutig die Besitzerbeziehung zwischen den zugehörigen Entitäten (3) bestimmt.

## Revendications

1. Outil de modélisation (1) comprenant :
un serveur de base de données (2) pour stocker une base de données incluant un modèle statique qui représente un objet technique à fabriquer, le modèle comprenant :
des entités (3), et
des éléments de connexion (4), qui définissent chacun un groupe d'entités associées (3) ;
un processeur (9) conçu pour prendre en charge de l'information entrante et sortante qui entre et sort du serveur de base de données (2) ;
un ensemble de règles (10) pour un stockage et un accès de manière structurée dans la base de données, les règles (10) définissant en outre des caractéristiques des entités (3) et des éléments de connexion (4) ; et
une interface utilisateur (7) permettant à un utilisateur de communiquer avec le serveur de base de données (2),
**caractérisé en ce que**
chaque élément de connexion (4) porte une marque d'identification (24) qui désigne une et une seule des entités (3) dans le groupe correspondant comme étant une entité propriétaire, dans lequel la capacité d'un utilisateur à accéder à un élément de connexion (4) et aux entités (3) dans le groupe correspondant est limitée par la capacité de l'utilisateur à accéder à l'entité propriétaire, tel que défini par des droits stockés pour l'entité,
dans lequel l'outil de modélisation (1) comprend en outre un outil d'effacement qui, sur une instruction donnée par un utilisateur d'effacer une entité (3), est conçu :
pour vérifier que l'utilisateur possède un droit d'effacer l'entité (3) conformément aux droits qui ont été stockés pour l'entité (3),
si le droit d'effacer n'existe pas, pour terminer l'opération et pour envoyer plutôt un message au client,
pour identifier ensuite tous les éléments de connexion (4) qui identifient l'entité (3) comme entité propriétaire et pour effacer tous ces éléments de connexion (4), après quoi l'entité (3) elle-même est effacée.

2. Outil de modélisation selon la revendication 1, **caractérisé en ce que** l'outil de modélisation comprend un outil de gel qui, sur une instruction donnée par un utilisateur de geler une entité (3), est conçu :
pour vérifier que le client possède le droit de geler l'entité (3), conformément aux droits qui ont été stockés pour l'entité (3), et ensuite pour identifier tous les éléments de connexion (4) qui sont possédés par l'entité (3),
sur identification des entités possédées (3), pour identifier toutes les entités (3) qui sont référencées à partir de ces éléments de connexion (4), jusqu'à ce qu'un ensemble fermé d'entités (3) et d'éléments de connexion (4) soit identifié,
pour vérifier ensuite qu'il n'y a rien pouvant éviter que cet ensemble d'entités (3) soit gelé, tel que défini par les droits sur celles-ci, ou qu'il n'y a pas d'autres conditions des entités (3) qui éviteraient un gel, y compris par exemple le cas où il est empêché qu'une entité (3) soit temporairement changée ou gelée par tout autre utilisateur,
pour geler toutes les entités (3) dans l'ensemble s'il n'y a rien pour l'éviter, et
pour ne pas mettre en oeuvre le gel s'il y a quelque chose qui l'empêche, et pour envoyer plutôt un message concernant cela au client.

3. Outil de modélisation selon la revendication 1 ou 2, **caractérisé en ce que** l'outil de modélisation comprend un outil de stockage qui, sur une instruction donnée par un utilisateur de stocker une entité (3) ou un élément de connexion (4), est conçu :
pour le stockage de nouveaux éléments de connexion (4) afin de vérifier les conditions consistant **en ce qu'**un et un seul rôle de propriété est défini, **en ce que** celui-ci appartient à une entité existante (3), et **en ce que** l'utilisateur du client possède le droit de mettre en oeuvre le stockage de l'entité, et ensuite
pour refuser de mettre en oeuvre le stockage de l'entité (3), si les conditions ne sont pas réalisées, et pour envoyer plutôt un message concernant cela au client, ou
pour mettre en oeuvre le stockage de l'entité (3) ou de l'élément de connexion (4), si les conditions sont remplies.

4. Outil de modélisation selon l'une quelconque des revendications 1 à 3, **caractérisé en ce que** l'outil de modélisation comprend un outil d'accès qui, sur une instruction donnée par un utilisateur d'autoriser l'accès à une entité (3) ou à un élément de connexion (4), est conçu :
pour vérifier que l'utilisateur a le droit de lire l'entité (3) ou l'élément de connexion (4), conformément aux droits qui sont définis pour l'entité propriétaire (3) pour l'élément de connexion (4), et ensuite
pour donner accès à l'entité (3) ou à l'élément de connexion (4) si les droits existent, ou pour refuser l'accès si les droits n'existent pas.

5. Outil de modélisation selon l'une quelconque des revendications 1 à 4, **caractérisé en ce que** l'entité propriétaire (3) dans le groupe associé d'entités (3) définit au moins les caractéristiques de version, d'aptitude à être modifié, d'existence et de capacité à accéder pour toutes les entités (3) dans ledit groupe d'entités associé (3).

6. Outil de modélisation selon la revendication 5, **caractérisé en ce que** la caractéristique de version est prise en charge par la caractéristique de gel, ce qui signifie que l'aptitude à être modifié cesse pour ledit groupe d'entités associées.

7. Outil de modélisation selon l'une quelconque des revendications 1 à 6, **caractérisé en ce que**, en plus de ladite relation de propriété, l'élément de connexion (4) décrit toutes les relations entre les entités (3) dans ledit groupe d'entités interconnectées (3) sous forme de rôles.

8. Outil de modélisation selon la revendication 7, **caractérisé en ce que** ledit groupe d'entités associées (3) définit une interface et comprend des entités (3) dans les rôles de bloc et de port, dans lequel un bloc désigne une entité ayant une interface, et un port désigne une entité (3) du type lien de connexion, qui définit une partie de l'interface, et **en ce que** ladite marque d'identification (24) désigne une entité (3) dans le rôle de bloc comme propriétaire.

9. Outil de modélisation selon la revendication 7 ou 8, **caractérisé en ce que** ledit groupe d'entités associées (3) définit une union et comprend des entités (3) dans les rôles d'union et de sous-ensemble, dans lequel le rôle d'union désigne une entité (3) du type bloc, lien de connexion, exigence ou activité, ladite entité (3) comprenant l'occurrence de toutes les entités (3) avec le rôle de sous-ensemble, et dans lequel le rôle de sous-ensemble désigne une entité (3) du type bloc, lien de connexion, exigence ou activité, où une entité (3) ne peut avoir qu'un des rôles d'union ou de sous-ensemble, et **en ce que** ladite marque d'identification (24) désigne une entité (3) dans le rôle d'union comme propriétaire.

10. Outil de modélisation selon la revendication 5, **caractérisé en ce qu'**une entité (3) du type exigence dans le rôle d'union peut uniquement être connectée à une entité (3) du type exigence dans le rôle de sous-ensemble.

11. Outil de modélisation selon la revendication 9 ou 10, **caractérisé en ce qu'**une entité (3) du type lien de connexion dans le rôle d'union peut uniquement être connectée à une entité (3) du type lien de connexion dans le rôle de sous-ensemble.

12. Outil de modélisation selon l'une quelconque des revendications 9 à 11, **caractérisé en ce que** ledit groupe d'entités associées (3) définit en outre une fonction de modélisation et comprend des entités (3) dans les rôles de fonction d'entrée et de fonction de sortie, où une entité (3) dans le rôle de fonction d'entrée est d'un type quelconque avec un comportement particulier et une interface définie, et des entités (3) dans le rôle de fonction de sortie ont un comportement et une interface correspondant à l'interface et au comportement de la fonction d'entrée, et **en ce que** ladite marque d'identification (24) désigne une entité (3) dans ladite union comme propriétaire.

13. Outil de modélisation selon l'une quelconque des revendications 7 à 12, **caractérisé en ce que** ledit groupe d'entités associées (3) définit une relation d'héritage et comprend des entités dans les rôles de parent et d'enfant, dans lequel une entité (3) dans le rôle de parent comprend au moins les caractéristiques interface, opérations, attribut et description et dans lequel une entité (3) dans le rôle d'enfant hérite de toutes les caractéristiques des entités (3) dans le rôle de parent, et **en ce que** ladite marque d'identification (24) désigne une entité (3) dans le rôle de parent comme propriétaire.

14. Outil de modélisation selon la revendication 12, **caractérisé en ce que** ledit groupe d'entités (3) est du type exigence.

15. Outil de modélisation selon l'une quelconque des revendications 1 à 14, **caractérisé en ce que** l'élément de connexion (4) comprend les caractéristiques suivantes :
caractéristique de classe et texte descriptif, en plus d'une marque d'identification (24) qui détermine de façon unique la relation de propriété entre les entités associées (3).
